# EUROPÄISCHE PATENTSCHRIFT

(11) **EP 1 060 036 B1**
(45) Veröffentlichungstag und Bekanntmachung des Hinweises auf die Patenterteilung: **19.02.2003**
(21) Anmeldenummer: 99902499.5
(22) Anmeldetag: 17.02.1999
(51) Int. Cl.: B21C 37/08, B23K 26/08, B23K 26/00

(54) **VERFAHREN UND VORRICHTUNG ZUR HERSTELLUNG VON ROHREN**
METHOD AND DEVICE FOR PRODUCING PIPES
PROCEDE ET DISPOSITIF POUR LA FABRICATION DE TUBES

(30) Priorität: 04.03.1998 CH 51398; 02.12.1998 CH 239798
(43) Veröffentlichungstag der Anmeldung: 20.12.2000
(73) Patentinhaber: ELPATRONIC AG, 8962 Bergdietikon (CH)
(72) Erfinder: GYSI, Peter, CH-5454 Bellikon (CH)
(86) Internationale Anmeldenummer: CH9900078
(87) Internationale Veröffentlichungsnummer: WO99044763

(56) Entgegenhaltungen:
- EP-A- 0 245 145
- EP-A- 0 743 129
- WO-A-98/26898
- DE-A- 4 223 247
- PATENT ABSTRACTS OF JAPAN vol. 016, no. 370 (M-1292), 10. August 1992 & JP 04 118191 A (TOSHIBA CORP;OTHERS: 01), 20. April 1992
- PATENT ABSTRACTS OF JAPAN vol. 097, no. 006, 30. Juni 1997 & JP 09 029477 A (AMADA CO LTD), 4. Februar 1997
- PATENT ABSTRACTS OF JAPAN vol. 014, no. 266 (M-0982), 8. Juni 1990 & JP 02 076648 A (HONDA MOTOR CO LTD), 16. März 1990

## Beschreibung

Die Erfindung betrifft eine Vorrichtung gemäss Oberbegriff des Patentanspruchs 1 (siehe z.B. JP-A-04 118 191) sowie ein Verfahren zum Betrieb einer solchen Vorrichtung.

Es ist bekannt, aus Blechen rohrförmig gebogene Körper mittels Laser entlang deren Längsnaht zu verschweissen, insbesondere mit einer Stumpfnaht, so dass entsprechende Rohre entstehen. Diese Rohre, deren Querschnitt beliebige Form haben kann, können insbesondere nachfolgend mittels eines Hydroforming-Verfahrens zu Formkörpern verformt werden, die in verschiedenen Gebieten verwendet werden können, insbesondere beim Karosseriebau für Fahrzeuge. JP 02 076648 A zeigt eine Vorrichtung zum Aufwickeln und Schweissen von Bändern um einen Gegenstand, mit zwei Arbeitsbereichen, wobei im einen Bereich gewickelt und im anderen Bereich geschweisst wird. JP 04 118191 A zeigt das Schweissen von verschiedenen Rohrabschnitten, welche für das Schweissen koaxial in Reihe angeordnet und ausgerichtet werden. JP 09 029477 A zeigt das Rohrschweissen mit einem revolverartig drehbaren Halteteil für mehrere Rohre. WO-A-98/26898 zeigt das Schweissen von auf Tischen aneinanderliegend fixierten ebenen Teilen mittels Laser, wobei der eine Laser beide Tische bedienen kann.

Es ist Aufgabe der Erfindung, eine Vorrichtung zur Herstellung von Rohren effizienter zu gestalten:

Diese Aufgabe wird mit den Merkmalen des Patentanspruchs 1 gelöst.

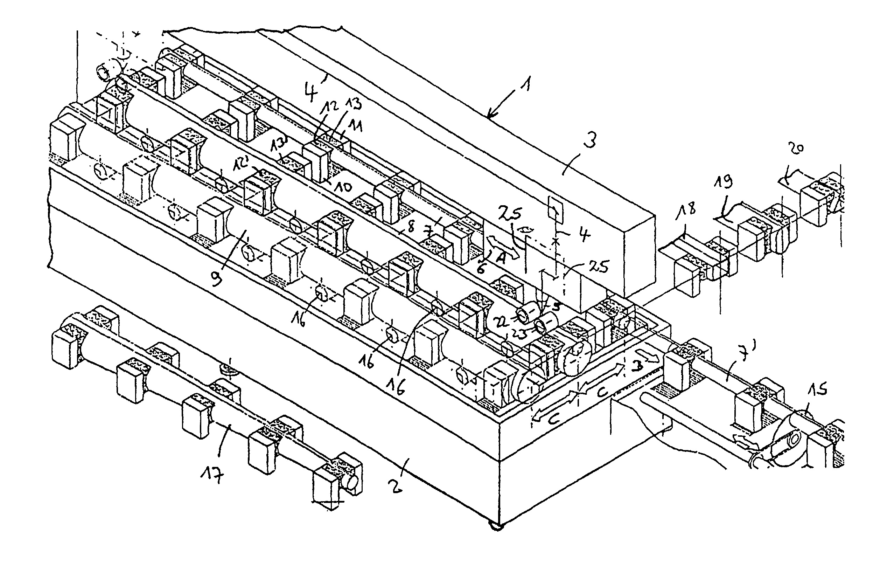

Im folgenden werden Ausführungsbeispiele der Erfindung anhand der einzigen Figur näher erläutert.

Die Figur zeigt in schematischer, perspektivischer Ansicht eine Vorrichtung 1 zum Laserschweissen von Rohren. Die Vorrichtung weist einen Tisch 2 und eine oberhalb desselben angeordnete Laserschweisseinrichtung 3 auf. Die Laserschweisseinrichtung 3 weist eine nicht gezeigte Laserquelle auf, von der aus der Laserstrahl 4 bis zu seinem Austritt 5 geleitet wird. Der Austritt 5 der Laserschweisseinrichtung ist an einem verfahrbaren Wagen 6 angeordnet, welcher in Richtung des Pfeiles A hin- und her verfahrbar ist, um die Schweissung auszuführen.

Der Tisch 2 weist mehrere Haltepositionen für Rohre 7, 8, 9 auf. Die Rohre sind auf dem Tisch 2 parallel angeordnet. Zur Halterung der Rohre sind an dem Tisch Haltemittel angeordnet, mittels welchen die Rohre auf dem Tisch festhaltbar sind. Die Haltemittel können für jedes Rohr aus einer Mehrzahl von Klemmbacken 10 und 11 bestehen, welche jeweils mit Formstücken 12 und 13 versehen sind, welche an die Form und den Durchmesser des jeweiligen Rohres angepasst sind. So sind entsprechend für das Rohr 8 die Formstücke 12' und 13' vorgesehen anstelle der Formstücke 12 und 13, welche für das Rohr 7 zum Einsatz kommen. Die Erfindung ergibt, bzw. das Ausführungsbeispiel zeigt ein sehr flexibles Maschinenkonzept, welches auch sehr gut für Kleinserien und auch für die Laborfertigurig geeignet ist. Die Gestaltung der Spannstellen ist daher derart ausgeführt, dass die Formstücke in kurzer Zeit gewechselt werden können; wie das Beispiel zeigt, können gleichzeitig verschiedene Formstücke montiert sein. Die Klemmbacken 10, 11 bzw. die weiteren gezeigten und nicht mit Bezugsziffern versehenen Klemmbacken sind zueinander bzw. voneinander weg positionierbar, um das jeweilige Rohr aufzunehmen und zu halten und nach der Schweissung wieder freizugeben. Die Rohre werden durch eine nicht gezeigte Beschickungsvorrichtung im gerundeten, noch ungeschweissten Zustand auf dem Tisch positioniert. Dabei sind die Klemmbacken noch so weit offen, dass eine Beschickung und eine allfällige Positionierung durch Hin- und Herschieben und allenfalls auch Drehen des Rohres um seine Längsachse erfolgen kann. Zur Erzielung der bestmöglichen Schweissverbindung ist vorzugsweise eine mindestens halbautomatisch oder als Steuerung oder Regelung arbeitende Einrichtung vorgesehen, die vorzugsweise berührungslos mit optischen Sensoren die Lage der Schweisskante über die ganze Rohrlänge erkennt und beim Positionierungs- bzw. Spannvorgang die Lage des Rohres beeinflusst. Wenn die Schweissposition des zu schweissenden Rohres erreicht ist, werden die Klemmbacken mit den daran angeordneten Formstücken so weit geschlossen, dass das Rohr in korrekter Position für die Schweissung gehalten wird. Die Spannstellen mit den Formstücken berühren den Rohrmantel vorzugsweise nur partiell und vorzugsweise nichtmetallisch (Formstücke aus Kunststoff), damit eine Beeinträchtigung der Oberfläche des Rohres vermieden wird.

Die Beschickung und die Aufnahme und das Festhalten der Rohre auf dem Tisch erfolgen gesteuert durch eine Steuerungseinrichtung, insbesondere einen Rechner. Bei der Schweissung kann der Laser auf bekannte Weise mit einem Nahtführungssystem 25 den zu schweissenden aneinanderliegenden Kanten nachgeführt werden. Nach der Schweissung wird das jeweilige Rohr durch eine Entladeeinrichtung vom Tisch entnommen, wobei dazu die Klemmbacken erneut gelöst werden, damit das Rohr durch die nicht näher dargestellte Entladeeinrichtung vom Tisch entnommen werden kann. Für das Rohr 7 ist dies schematisch in der Zeichnung angedeutet, indem der Pfeil B die Entladerichtung zeigt und das Rohr im bereits entladenen Zustand als Rohr 7' dargestellt ist. Das entladene Rohr kann z.B. durch eine nur schematisch dargestellte Schneideeinrichtung 15 auf verschiedene gewünschte Längen zugeschnitten werden.

Der Tisch mit den mehreren Positionen für darauf angeordnete Rohre ermöglicht nun das gleichzeitige Schweissen bzw. Beladen und Entladen. So kann in dem dargestellten Beispiel das Rohr 8 verschweisst werden, während das bereits geschweisste Rohr 7 entladen wird. Gleichzeitig ist es möglich, das noch ungeschweisste Rohr 9 auf den Tisch zu laden und mit den entsprechenden Klemmbacken festzuhalten. Die Abläufe des Beladens, Schweissens und Entladens können aber auch nacheinander anstelle gleichzeitig oder auch in Kombinationen erfolgen, z.B. gleichzeitiges Beladen und Entladen je eines Rohres und danach Schweissen des einen Rohres; dies verhindert, dass die Schweissung von Erschütterungen durch das Beladen oder Entladen beeinflusst wird. Das Verfahren bzw. die Vorrichtung ermöglicht es, die Laserschweissanlage optimal zu nutzen. In dem gezeigten Beispiel kann also nach dem Fertigschweissen des Rohres 8 der Laser direkt zur Schweissung des Rohres 9 übergehen, indem z.B. der Tisch 2 gemäss dem Pfeil C so verfahren wird, dass der Laseraustritt über den zu verschweissenden Kanten des Rohres 9 angeordnet ist. Während der Schweissung des Rohres 9 kann dann das bereits geschweisste Rohr 8 entladen werden und z.B. gleichzeitig ein neues, an die Stelle des gezeigten Rohres 7 tretendes Rohr auf den Tisch durch die Beschickungseinrichtung angeordnet werden. Nach der Schweissung des Rohres 9 kann dann erneut der Tisch so verfahren werden, dass das nunmehr an der Stelle des Rohres 7 angeordnete zu schweissende Rohr geschweisst werden kann, während das bereits geschweisste Rohr entladen wird. Das Entladen kann z.B. tischseitig mittels angetriebener Rollen 16 erfolgen, welche beim Rohr 9 als Beispiel dargestellt sind. Natürlich kann anstelle der Verfahrbarkeit des Tisches 2 quer zur Schweissrichtung auch ein starrer Tisch vorgesehen sein und die Schweisseinrichtung entsprechend verfahren werden. Auch die Beschikkungs- und Entladeeinrichtungen werden in diesem Fall entsprechend verfahren, wenn der Tisch stationär ist.

Das Verfahren bzw. die Vorrichtung erlaubt es z.B. alternierend ein Rohr mit einem kleineren Durchmesser und ein Rohr mit einem grösseren Durchmesser zu schweissen. Dies kann für jeden Rohrdurchmesser immer an der selben Tischposition erfolgen und auch das Entladen kann entsprechend erfolgen, so dass die geschweissten Rohre bereits nach Durchmesser getrennt ausgegeben oder zwischengelagert werden.

Die gezeigte Anordnung, bzw. das Verfahren mit der Aufnahme mehrerer Rohre erlaubt die optimale Ausnutzung der Schweisseinrichtung und die Anpassung derselben an die Biegeeinrichtung. Die Biegeeinrichtung für die Rohre ist im wesentlichen vom Durchmesser der Rohre zeitabhängig und nicht von deren Länge. Die Schweissung hingegen ist von der Länge der zu erzeugenden Schweissnaht zeitabhängig. Das beschriebene Verfahren bzw. die Anordnung erlaubt eine optimale Abstimmung der genannten Vorgänge. Vor der Beschickungseinrichtung für den Tisch 2 kann ein Pufferlager oder eine Transfereinrichtung angeordnet sein, welche die Zwischenlagerung bereits gebogener Rohre ermöglicht. Auch entladeseitig des Tisches 2 kann ein Pufferlager oder eine Transfereinrichtung vorgesehen sein.

In der Figur ist weiter dargestellt, dass die Klemmbacken mit den Formstücken auch das einfache Festhalten eines konisch gebogenen Rohres 17 ermöglichen, welches schematisch neben dem Tisch dargestellt ist, um diese Möglichkeit zu erläutern. Durch einfaches Auswechseln der Formteile 12, 13 kann daher eine flexible Anpassung an verschiedene Rohrdurchmesser oder eben konische Rohre erfolgen. Ebenso kann durch das Auswechseln der Formteile eine Anpassung an Rohre verschiedener Querschnittsformgebung erfolgen. Dies ist ebenfalls schematisch in der Figur neben dem Tisch mittels der nur teilweise dargestellten Rohre 18, 19 und 20 dargestellt, welche entsprechend nicht runde Formgebung aufweisen und mit entsprechend geformten Formteilen 12, 13 gehalten werden.

Für die Qualität der Laserschweissung ist es wesentlich, dass die einander gegenüberliegenden Stirnflächen des gebogenen Bleches im wesentlichen parallel zueinander liegen und nicht über ein tolerierbares Mass hinaus V-förmig zueinander liegen. Dies ist insbesondere dann wichtig, wenn die derart geschweissten Rohre einem weiteren Umformungsprozess unterliegen, insbesondere einem Hydroforming-Prozess, bei welchem die Schweissnaht einer entsprechend hohen Belastung ausgesetzt werden kann. Vorzugsweise wird daher im Bereich der Austrittstelle 5 des Lasers auf die Kanten der gebogenen Bleche eingewirkt, derart, dass die Stirnflächen im Bereich der Schweissung im wesentlichen parallel zueinander zu liegen kommen. In der Figur ist dies durch die Walzen bzw. Rollen 22 und 23 angedeutet, welche die Kanten mehr oder weniger beaufschlagen, um eine parallele Ausrichtung der Stirnflächen zu ergeben, derart, dass eine Laserschweissung im Bereich der zulässigen Toleranz möglich wird. Ansteile der gezeigten Walzen, von denen bevorzugterweise zwei Stück vorhanden sind, können auch andere Beaufschlagungsmittel für die Kanten vorgesehen sein. Die Walzen können z.B. auf einer einstellbaren fixen Höhe eingestellt sein, welche der entsprechenden bevorzugten Kantenlage entspricht.

Anstelle der gezeigten Anordnung mit drei Aufnahmepositionen für Rohre können auch nur zwei oder können mehr als drei Aufnahmepositionen vorgesehen sein. Es ist auch möglich, mehr als eine Laserschweisseinrichtung vorzusehen. Diese Art der Laserquelle ist dabei frei wählbar, z.B. CO₂ und YAG Laser. Anstelle der beschriebenen Stumpfnahtschweissung ist auch die Schweissung einer Überlappnaht grundsätzlich möglich. Die zu verschweissenden Rohre können z.B. aus Blechen aus Stahl, Chromstahl oder Aluminium geformt werden. Als Grössen kommen dabei insbesondere Rohre mit einem Durchmesser von 6 cm bis 20 cm, einer Länge von 50 cm bis 3 m und einer Blechdicke von 0,6 bis 2 mm in Frage, wobei natürlich auch abweichende Dimensionen möglich sind.

## Patentansprüche

1. Vorrichtung (1) zur Längsnahtschweissung von Rohren (7,8,9) mittels eines Laserstrahles (4), wobei ein Tisch (2) mit Haltemitteln vorgesehen ist und wobei die Haltemittel zueinander hin bzw. voneinander weg positionierbare Klemmbacken (10,11) aufweisen, und eine Einrichtung zur Erkennung der Lage der zu schweissenden Kanten von Rohren vorgesehen ist, **dadurch gekennzeichnet, dass** die Haltemittel am Tisch aus einer Mehrzahl von Klemmbacken (10,11) bestehen, die zur parallelen Halterung von mindestens zwei Rohren (7,8,9; 17 bis 20), angeordnet sind, und dass eine Laserstrahlquelle vorgesehen ist, deren über dem Tisch angeordneter Laserstrahlaustritt (5) in Längsrichtung des Tisches verfahrbar ist und in Querrichtung durch Verfahren des Austrittes (5) über den Tisch oder durch Verfahren des Tisches unter dem Austritt verfahrbar ist.

2. Vorrichtung nach Anspruch 1, **dadurch gekennzeichnet, dass** die Haltemittel mit auswechselbaren Formstücken (12,13,12',13') versehen sind, welche eine auf eine vorbestimmte Rohraussenkontur angepasste Formgebung aufweisen.

3. Vorrichtung nach Anspruch 1 oder 2, **gekennzeichnet durch** Mittel (22,23) zur Beaufschlagung der Kanten der zu schweissenden Rohre (7,8,9), derart, dass die einander gegenüberliegenden zu verschweissenden Stirnflächen im wesentlichen parallel zueinander zu liegen kommen.

4. Vorrichtung nach einem der Ansprüche 1 bis 3, **dadurch gekennzeichnet, dass** die Einrichtung zur Erkennung der Lage der zu verschweissenden Kanten derart ausgestaltet ist, dass sie die Lage über die Länge des Rohres erfasst.

5. Verfahren zum Betrieb einer Vorrichtung zur Längsnahtschweissung von Rohren (7,8,9), mittels eines Laserstrahls (4) gemäß einem der Ansprüche 1 bis 4, wobei ein zu schweissendes Rohr (7,8,9; 17 bis 20) durch eine Beschickungsvorrichtung in die voneinander weg positionierten Klemmbacken (10,11) positioniert wird, indem das Rohr in Abhängigkeit von der Einrichtung zur Erkennung der Lage der Kanten in den Klemmbacken hin und her geschoben und allenfalls gedreht wird, bis die Schweissposition des Rohres erreicht ist, und dass anschliessend die Klemmbacken (10,11) geschlossen werden und das Rohr geschweisst wird.

6. Verfahren nach Anspruch 5, **dadurch gekennzeichnet, dass** während des Schweissens eines Rohres (8) das Entladen eines bereits geschweissten Rohres (7') erfolgt.

7. Verfahren nach Anspruch 6, **dadurch gekennzeichnet, dass** während des Schweissens ferner das Beladen und Positionieren eines weiteren zu schweissenden Rohres erfolgt.

8. Verfahren nach Anspruch 5, **dadurch gekennzeichnet, dass** in einem ersten Schritt ein zu schweissendes Rohr geladen und gleichzeitig ein geschweisstes Rohr entladen wird, dass nachfolgend in einem zweiten Schritt das Schweissen des Rohres erfolgt, wonach wieder ein erster Schritt ausgeführt wird.

## Claims

1. Apparatus (1) for welding the longitudinal seam of tubes (7, 8, 9) by means of a laser beam (4), wherein a table (2) is provided which has holding means and wherein the holding means have clamping jaws (10, 11) that can be shifted into position towards and away from one another, and a device is provided for detecting the position of the welding edges of tubes, **characterized in that** the holding means on the table consist of a plurality of clamping jaws (10, 11) arranged for parallel holding of at least two tubes (7, 8, 9; 17 to 20), and **in that** a laser beam source is provided, whose laser beam emission head (5), which is arranged above the table, is traversable in the longitudinal direction of the table and is traversable in the transverse direction by traversing the emission head (5) over the table or by traversing the table under the emission head.

2. Apparatus according to Claim 1, **characterized in that** the holding means are provided with exchangeable shaped pieces (12, 13, 12', 13') which have a shape matching a predetermined tube outer profile.

3. Apparatus aqccording to Claim 1 or Claim 2, **characterized by** means (22, 23) for acting on the edges of the tubes (7, 8, 9) to be welded so that the opposing welding edge faces are brought into substantially parallel alignment.

4. Apparatus according to any one of Claims 1 to 3, **characterized in that** the device for detecting the position of the welding edges is configured to detect the position over the length of the tube.

5. Method for the operation of an apparatus for welding the longitudinal seam of tubes (7, 8, 9) by means of a laser beam (4) according to any one of Claims 1 to 4, wherein a tube (7, 8, 9; 17 to 20) to be welded is positioned in the parted clamping jaws (10, 11) by a loading apparatus, which does this by shifting the tube forward and back, and if need be rotating it, as prompted by the device for detecting the position of the edges, until the correct welding position of the tube is obtained, and in that the clamping jaws (10, 11) are then closed and the tube is welded.

6. Method according to Claim 3, **characterized in that** while a tube (8) is being welded, a tube (7') that has already been welded is unloaded.

7. Method according to Claim 6, **characterized in that** during welding, another tube is loaded and positioned for welding.

8. Method according to Claim 5, **characterized in that** a tube for welding is loaded and a welded tube is simultaneously unloaded in a first step, [and] **in that** the tube is welded in a second step, after which the first step is repeated.

## Revendications

1. Dispositif pour le soudage longitudinal de tubes (7, 8, 9) à l'aide d'un faisceau laser (4), dans lequel une table (2) est pourvue de moyens de maintien, et les moyens de maintien comportent des mâchoires de serrage (10, 11), qui peuvent être positionnées en étant rapprochées ou écartées l'une de l'autre, et il est prévu un dispositif pour identifier la position des bords à souder de tubes, **caractérisé en ce que** les moyens de maintien situés sur la table sont constitués par une multiplicité de mâchoires de serrage (10, 11), qui sont agencées pour maintenir parallèlement au moins deux tubes (7, 8, 9; 17 à 20) et qu'il est prévu une source de rayonnement laser, dont la sortie du faisceau laser (5), qui est disposée au-dessus de la table, est déplaçable dans la direction longitudinale de la table et dans la direction transversale par déplacement de la sortie (5) au-dessus de la table ou par déplacement de la table au-dessous de la sortie.

2. Dispositif selon la revendication 1, **caractérisé en ce que** les moyens de maintenir sont pourvus de pièces de forme interchangeable (12, 13, 12', 13'), qui possèdent une conformation adaptée à un contour extérieur de tube prédéterminé.

3. Dispositif selon la revendication 1 ou 2, **caractérisé par** des moyens (22, 23) pour charger les bords des tubes à souder (7, 8, 9) de telle sorte que les surfaces frontales à souder réciproquement en vis-à-vis, viennent se placer essentiellement parallèlement l'une à l'autre.

4. Dispositif selon l'une des revendications 1 à 3, **caractérisé en ce que** le dispositif servant à identifier la position des bords devant être soudés est agencés de telle sorte qu'il détecte la position sur la longueur du tube.

5. Procédé pour faire fonctionner un dispositif pour le soudage longitudinal de tubes (7, 8, 9), à l'aide d'un faisceau laser (4), selon l'une des revendications 1 à 4, dans lequel un tube à souder (7, 8, 9; 17 à 20) est positionné par un dispositif de chargement dans les mâchoires de serrage (10, 11) qui sont écartées l'une de l'autre, par le fait que le tube est déplacé en va-et-vient et au besoin est entraîné en rotation entre les mâchoires de serrage en fonction du dispositif servant à identifier la position des bords jusqu'à ce que la position de soudage du tube soit atteinte, et qu'ensuite les mâchoires de serrage (10, 11) sont fermées et le tube est soudé.

6. Procédé selon la revendication 5, **caractérisé en ce que** pendant le soudage d'un tube (8), le déchargement d'un tube déjà soudé (7') est exécuté pendant le soudage d'un tube (8).

7. Procédé selon la revendication 6, **caractérisé en ce qu'**on réalise en outre le chargement et le positionnement d'un autre tube à souder pendant le soudage.

8. Procédé selon la revendication 5, **caractérisé en ce que** lors d'une première étape, un tube à souder est chargé et simultanément un tube soudé est déchargé, qu'ensuite lors d'une seconde étape, le soudage du tube est exécuté, à la suite de quoi une première étape est à nouveau exécutée.
